# FASCICULE DE BREVET EUROPEEN

(11) **EP 3 712 378 B1**
(45) Date de publication et mention de la délivrance du brevet: **24.07.2024**
(21) Numéro de dépôt: 20161860.0
(22) Date de dépôt: 09.03.2020
(51) Int. Cl.: F01D 5/18, B22C 9/04, B22C 9/10

(54) **AUBE DE TURBOMACHINE, COMPORTANT DES DÉFLECTEURS DANS UNE CAVITÉ INTERNE DE REFROIDISSEMENT**
HOHLE LAUFRADSCHAUFEL EINES TURBOTRIEBWERKS, DIE LUFTABLENKEINRICHTUNGEN IM KÜHLHOHLRAUM UMFASST
TURBINE ENGINE BLADE COMPRISING DEFLECTORS IN AN INTERNAL COOLING CAVITY

(30) Priorité: 21.03.2019 FR 1902947
(43) Date de publication de la demande: 23.09.2020
(73) Titulaire: SAFRAN AIRCRAFT ENGINES, 75015 Paris (FR)
(72) Inventeur: SLUSARZ, Michel, 77550 MOISSY-CRAMAYEL (FR); ENEAU, Patrice, 77550 MOISSY-CRAMAYEL (FR)
(74) Mandataire: Brevalex

(56) Documents cités:
- EP-A1- 3 438 412
- EP-A2- 1 818 504
- WO-A1-2019/005425
- FR-A5- 2 165 499
- US-A1- 2017 152 748
- US-A1- 2018 038 232

## Description

### DOMAINE TECHNIQUE

L'invention concerne une aube de turbomachine, notamment une aube mobile de turbine à gaz comportant une cavité interne de refroidissement.

L'invention concerne plus particulièrement une aube comportant des moyens pour améliorer les échanges de chaleur entre les parois de l'aube et un flux d'air de refroidissement circulant au travers de l'aube.

### ÉTAT DE LA TECHNIQUE ANTÉRIEURE

Les aubes d'une turbine à gaz de turbomachine, telles que les aubes mobiles de la turbine haute pression par exemple, sont soumises aux températures élevées des gaz issus de la chambre de combustion de la turbomachine.

Ces températures sont suffisamment élevées pour provoquer des dommages irréversibles sur les aubes, ce qui a pour conséquence de limiter leur durée de vie.

Afin de limiter l'échauffement de ces aubes, il est connu de réaliser dans les aubes un circuit de refroidissement comprenant une ou plusieurs cavités dans lesquelles un fluide refroidissement tel que de l'air circule.

L'air est généralement introduit par le pied de l'aube, il traverse chaque cavité selon un cheminement optimisé puis est éjecté par des orifices formés dans les parois de l'aube.

Une optimisation du circuit de refroidissement a pour objet d'augmenter les échanges de chaleur entre l'air de refroidissement et les parois de l'aube.

Ainsi, une quantité moindre d'air de refroidissement sera nécessaire au refroidissement de celle-ci. De l'air de refroidissement relativement frais est acheminé au niveau du pied de l'aube, circule dans des cavités internes de l'aube pour assurer son refroidissement, ensuite l'air de refroidissement est rejeté hors de l'aube dans le flux de gaz global, il a une influence sur le rendement global de la turbomachine.

Aussi, l'amélioration du refroidissement de l'aube permet à celle-ci d'être utilisée dans une veine soumise à des gaz ayant une température plus importante, permettant par conséquent une augmentation de la poussée produite par la turbomachine.

L'amélioration du refroidissement de l'aube permet enfin d'augmenter la durée de vie de l'aube, pour de mêmes conditions de débit et de température dans la veine/

Ainsi, en augmentant les échanges de chaleur entre le flux d'air et les parois de l'aube, il est possible d'améliorer le rendement de la turbomachine.

Parmi les moyens permettant de favoriser les échanges de chaleur, il a été proposé de former des déflecteurs dans une cavité interne. Ces déflecteurs produisent des perturbations dans l'écoulement d'air, favorisant ainsi les échanges de chaleur. Les demandes de brevet FR2165499 et EP3438412 décrivent des exemples d'aubes avec déflecteur.

L'invention a pour but de proposer une conception d'aube permettant d'améliorer encore les échanges de chaleur par l'utilisation de déflecteurs.

### EXPOSÉ DE L'INVENTION

L'invention propose une aube de turbine, qui est destinée à être disposée autour d'un axe de la turbine, en s'étendant radialement par rapport au dit axe de la turbine et comportant à une première extrémité radialement interne un pied, à une deuxième extrémité radialement externe un sommet et une pale s'étendant radialement entre le pied et le sommet qui est délimitée par un bord d'attaque axialement amont, un bord de fuite axialement aval, une paroi d'intrados et une paroi d'extrados qui relient entre eux le bord d'attaque et le bord de fuite et au moins une cavité interne s'étendant entre le pied et le sommet, une ouverture d'admission d'un fluide dans la cavité situé à une extrémité radialement interne de la cavité et au moins une ouverture de sortie dudit fluide qui débouche hors de l'aube,

la cavité comportant une pluralité de déflecteurs qui sont portés par une face interne de la paroi d'intrados et par une face interne de la paroi d'extrados. Les déflecteurs sont disposés alternativement sur la paroi d'intrados et sur la paroi d'extrados selon la direction radiale de la cavité dans laquelle chaque déflecteur s'étend selon une direction transversale depuis la face interne de la paroi d'intrados ou depuis la face interne de la paroi d'extrados, en direction de l'autre de la paroi d'intrados ou de la paroi d'extrados, et dans laquelle la longueur de chaque déflecteur selon la direction transversale est supérieure à la moitié de la distance transversale entre la face interne de la paroi d'intrados et la face interne de la paroi d'extrados de part et d'autre du déflecteur, de manière que les extrémités transversales libres des déflecteurs se chevauchent transversalement, dans laquelle les déflecteurs sont inclinés par rapport à la direction transversale. Les déflecteurs portés par la face interne de la paroi d'intrados et/ou les déflecteurs portés par la face interne de la paroi d'extrados sont inclinés par rapport à la direction transversale dans le sens d'écoulement du fluide dans la cavité.

Une telle longueur transversale des déflecteurs permet de dévier le flux d'air circulant pour qu'il ne soit plus seulement orienté selon l'axe principal de l'aube mais aussi pour qu'il soit sinueux entre les parois d'intrados et d'extrados qui sont soumises aux plus hautes températures et nécessitent d'être refroidies.

De préférence, chaque déflecteur s'étend entre une paroi d'extrémité axiale amont et une paroi d'extrémité axiale aval de la cavité

De préférence, chaque déflecteur est relié à la paroi d'extrémité axiale amont et à la paroi d'extrémité axiale aval de la cavité.

De préférence, les déflecteurs sont inclinés par rapport à la direction transversale et les déflecteurs portés par la paroi d'intrados sont inclinés par rapport aux déflecteurs portés par la paroi d'extrados.

De préférence, chaque déflecteur qui est porté par l'une de la paroi d'intrados ou de la paroi d'extrados est situé radialement entre deux déflecteurs qui sont portés par l'autre de la paroi d'intrados ou de la paroi d'extrados.

De préférence, la cavité comporte plusieurs tronçons d'orientation principale radiale, qui sont décalés axialement l'un par rapport à l'autre et qui s'étendent chacun entre le pied et le sommet de l'aube en formant un serpentin qui s'étend axialement entre le bord d'attaque et le bord de fuite, et lesdits déflecteurs sont formés dans au moins un tronçon de la cavité.

De préférence, ledit tronçon est un tronçon dans lequel le fluide est destiné à s'écouler dans un sens depuis le sommet vers le pied de l'aube.

L'invention concerne aussi un procédé de fabrication d'une aube selon l'invention, qui comporte une étape de production d'un noyau correspondant à ladite au moins une cavité de l'aube, le noyau comportant des évidements destinés à la formation des déflecteurs, le procédé comportant en outre une étape de mise en place du noyau dans un moule et une étape de moulage de l'aube, caractérisé en ce que l'étape de production du noyau est une étape par fabrication additive.

L'invention concerne aussi une turbomachine comportant une turbine à gaz caractérisé en ce qu'elle comporte une pluralité d'aubes selon l'invention.

### BRÈVE DESCRIPTION DES DESSINS

[Fig. 1] est une représentation schématique d'une aube de turbine comportant des cavités de refroidissement ;
[Fig. 2] est un détail d'un tronçon d'une cavité montrant la présence de déflecteurs dans la cavité ;
[Fig. 3] est une section du tronçon représenté à la figure 2 selon un plan axial montrant l'effet des déflecteurs sur l'écoulement d'air ;
[Fig. 4] est une représentation schématique à plus grande échelle d'un détail de la figure 3 montrant la géométrie préférée des déflecteurs ;
[Fig. 5] est une vue selon l'invention, dans laquelle les déflecteurs sont inclinés par rapport à la direction principale de l'aube dans un premier sens ;
[Fig. 6] est une vue selon l'invention, dans laquelle les déflecteurs sont inclinés par rapport à la direction principale de l'aube dans un deuxième sens ;
[Fig. 7] est une vue selon l'invention, dans laquelle les déflecteurs sont alternativement inclinés par rapport à la direction principale de l'aube dans deux sens opposés.

### DESCRIPTION DÉTAILLÉE DE L'INVENTION

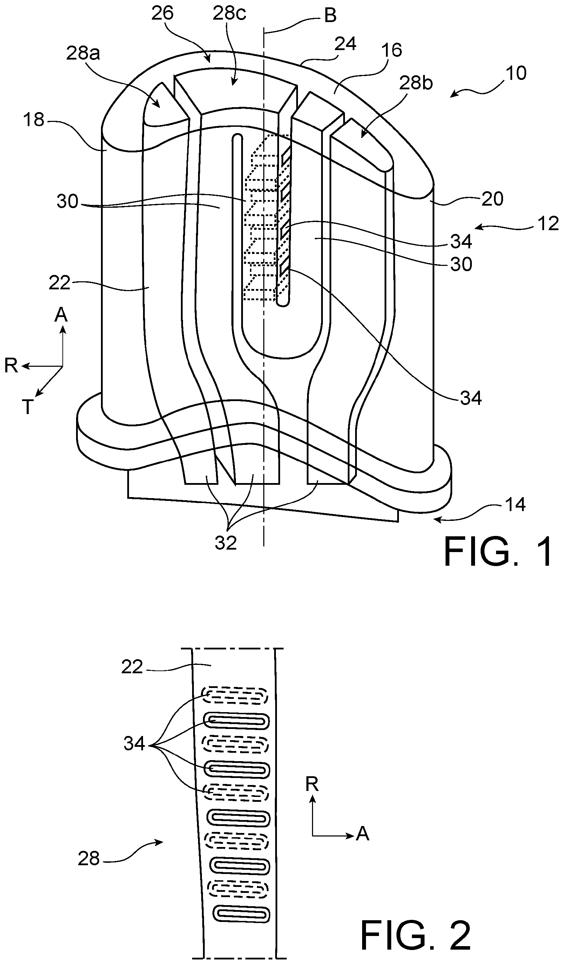

La figure 1 représente une aube mobile 10 de turbomachine, telle qu'une aube mobile de turbine haute pression.

Il sera compris que l'invention n'est pas limitée à cette seule aube mobile et qu'elle peut aussi s'appliquer à une aube fixe d'une turbine de la turbomachine.

L'aube 10 comporte une partie aérodynamique 12, appelée pale, qui s'étend selon un axe principal B de l'aube 10 entre un pied 14 et un sommet 16.

Lorsque l'aube est montée dans la turbomachine, son axe principal B est orienté principalement radialement par rapport à l'axe principal de la turbine et donc l'axe principal de la turbomachine, avec la pale 12 s'étendant au travers d'une veine de circulation de gaz.

Dans la description qui va suivre, on utilisera les orientations axiale, radiale, transversale selon le repère ART représenté aux figures, pour lequel la direction axiale est la direction de l'axe principal de la turbomachine, la direction radiale est la direction de l'axe principal B de l'aube 10, qui est radiale par rapport à l'axe principal de la turbomachine et la direction transversale est la direction perpendiculaire aux directions axiale et radiale.

Le pied 14 est alors situé à l'extrémité radialement interne de l'aube 10, il est destiné à la liaison de l'aube 10 avec un disque de turbine haute pression de la turbomachine. Sa conception étant connue, elle ne sera pas décrite plus en détails.

Le sommet 16 est situé à l'extrémité radialement externe de l'aube 10, il est destiné à être disposé à proximité d'une paroi annulaire délimitant la veine de circulation de gaz.

La pale 12 est conformée pour être baignée dans le flux de gaz provenant de la chambre de combustion.

Elle comporte un bord d'attaque 18 situé à une première extrémité axiale de l'aube 10, un bord de fuite 20 situé à une deuxième extrémité axiale opposée de l'aube 10, une paroi d'intrados 22 et une paroi d'extrados 24 s'étendant chacune entre le bord d'attaque 18 et le bord de fuite 20, qui délimitent transversalement la pale 12.

L'aube 10 est aussi munie d'un circuit interne de refroidissement 26 destiné à refroidir l'aube 10 vis-à-vis de la chaleur élevée des gaz provenant de la chambre de combustion de la turbomachine et dans lesquels la pale 14 est destinée à être baignée.

Le circuit de refroidissement 26 comprend au moins une cavité 28 s'étendant dans la pale 12 selon la direction de l'axe principal B de l'aube 10.

Ici, selon le mode de réalisation représenté à la figure 1, le circuit de refroidissement 26 comporte trois cavités 28 distribuées selon la direction axiale, à savoir une cavité 28a de bord d'attaque disposée du côté du bord d'attaque 18, une cavité 28b de bord de fuite disposée du côté du bord de fuite 20 et une cavité centrale 28c située axialement entre la cavité 28a de bord d'attaque et la cavité 28b de bord de fuite.

La cavité 28a de bord d'attaque et la cavité 28b de bord de fuite sont toutes les deux de forme principale allongée ayant une orientation radiale, c'est-à-dire une orientation sensiblement parallèle à l'axe principal B.

La cavité 28 centrale est de forme sinueuse, elle est constituée de trois tronçons consécutifs 30, dont chacun est orienté radialement, c'est-à-dire dont chacun est sensiblement parallèle à l'axe principal B et qui sont alignés.

Le tronçon 30 central est raccordé à son extrémité radialement externe, qui est proche du sommet 16, à l'extrémité du tronçon 30 situé du côté du bord d'attaque 18 et à son extrémité radialement interne, qui est proche du pied 14 à une extrémité du tronçon 30 situé du côté du bord de fuite 20.

Ainsi, la cavité 28 centrale présente un coude au niveau de chaque raccordement entre deux tronçons 30 adjacents.

Chaque cavité 28 comporte une ouverture d'admission d'air 32 située à une extrémité radialement interne de l'aube 10, ici au niveau du pied 14 par lequel un flux d'air destiné au refroidissement de l'aube 10 est introduit dans le circuit de refroidissement.

En outre, ici, seul le tronçon 30 de la cavité centrale 28 qui est situé le plus proche du bord d'attaque 18 que les autres tronçons 30, comporte une ouverture d'admission d'air 32.

Chaque cavité 28 comporte des orifices (non représentés) permettant à l'air de refroidissement de sortir hors de l'aube 10, dans la veine d'écoulement de gaz. Ces orifices débouchent notamment dans les parois d'intrados 22 et d'extrados 24.

Chaque cavité 28 est délimitée transversalement par la paroi d'intrados 22 et la paroi d'extrados 24.

Ainsi, lors de sa circulation au travers de chaque cavité 28, l'air de refroidissement échange de la chaleur avec la paroi d'intrados 22 et la paroi d'extrados 24 pour les refroidir.

Afin de favoriser les échanges de chaleur entre l'air de refroidissement et la paroi d'intrados 22 et la paroi d'extrados 24, au moins une cavité 28, et de préférence chaque cavité 28 comporte une pluralité de déflecteurs d'air 34.

Chaque déflecteur 34 est porté par la face interne 22i de la paroi d'intrados 22 ou par la face interne 24i de la paroi d'extrados 24 et il fait saillie selon la direction transversale à l'intérieur de la cavité 28 en direction de l'autre paroi 22, 24 et il est parallèle à la direction axiale.

La dimension axiale de chaque déflecteur 34 est sensiblement égale à la dimension axiale de la cavité 28, c'est-à-dire que chaque déflecteur s'étend sur sensiblement toute la dimension axiale de la cavité.

De préférence, chaque déflecteur 34 s'étend axialement sur toute la dimension axiale de la cavité 28, il est ainsi relié aux deux parois d'extrémité axiale amont et aval de la cavité 28.

En outre, les déflecteurs 34 sont disposés alternativement sur la paroi d'intrados 22 et sur la paroi d'extrados 24 selon la direction radiale de la cavité 28, c'est-à-dire qu'un déflecteur 34 porté par la face interne 22i de la paroi d'intrados 22 est situé radialement entre deux déflecteurs 34 qui sont portés par la face interne 24i de la paroi d'extrados 24 et un déflecteur 34 porté par la face interne 24i de la paroi d'extrados 24 est situé radialement entre deux déflecteurs 34 qui sont portés par la face interne 22i de la paroi d'intrados 22.

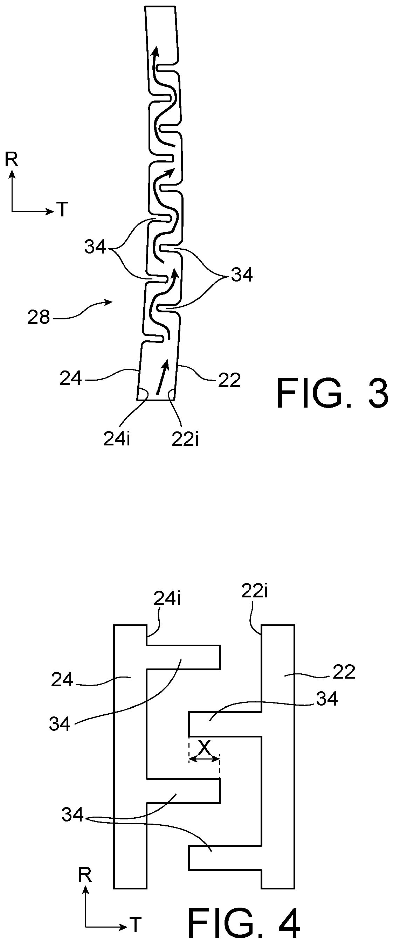

Comme on peut le voir plus en détails à la figure 4, la dimension transversale de chaque déflecteur 34 est supérieure à la moitié de la distance entre la face interne 22i de la paroi d'intrados 22 et la face interne 24i de la paroi d'extrados 24.

Ainsi, les extrémités transversales libres des déflecteurs 34 se chevauchent transversalement.

Il en résulte que le conduit ainsi formé dans la cavité 28 et dans lequel l'air de refroidissement s'écoule n'est pas seulement orienté selon la direction de l'axe principal B mais il serpente aussi transversalement dans la cavité 28.

Cela force le flux d'air à parcourir un chemin plus long que la longueur axiale de la cavité 28 et donc cela augmente les échanges de chaleur entre le flux d'air et les parois d'intrados 22 et d'extrados 24.

En outre, et plus particulièrement en relation avec le deuxième tronçon 30 de la cavité centrale 28, grâce à la dimension transversale des déflecteurs 34, le flux d'air parcourt sa trajectoire sinusoïdale dans ce tronçon, même lorsqu'il circule en sens opposé au sens de circulation dans les autres tronçons 30.

En effet, conformément à l'art antérieur pour lequel les déflecteurs sont plus courts que la moitié de la distance entre la paroi d'intrados et la paroi d'extrados, ces déflecteurs ne produisent que des perturbations dans l'écoulement de l'air. Ainsi, lorsque la turbomachine est en fonctionnement, l'effet de Coriolis qui s'exerce sur le flux d'air et qui est produit par la rotation de l'aube, a tendance, dans ce tronçon intermédiaire de la cavité, à plaquer l'air sur une seule paroi de l'aube 10, limitant les échanges de chaleur.

Grâce à la longueur des déflecteurs 34 selon l'invention, qui est supérieure à la moitié de la distance entre la paroi d'intrados 22 et la paroi d'extrados 24, le flux d'air est forcé à circuler le long de la face interne 22i, 24i de la paroi d'intrados 22 et la paroi d'extrados 24.

En outre, les déflecteurs 34 forment des ailettes d'échange de chaleur avec l'air de refroidissement, ce qui permet d'augmenter encore l'échange de chaleur entre l'air de refroidissement et les parois d'intrados et d'extrados.

Selon un premier mode représenté à la figure 4, chaque déflecteur 34 est aussi perpendiculaire à la direction principale radiale de la cavité 28, c'est-à-dire qu'il s'étend dans un plan axial transversal.

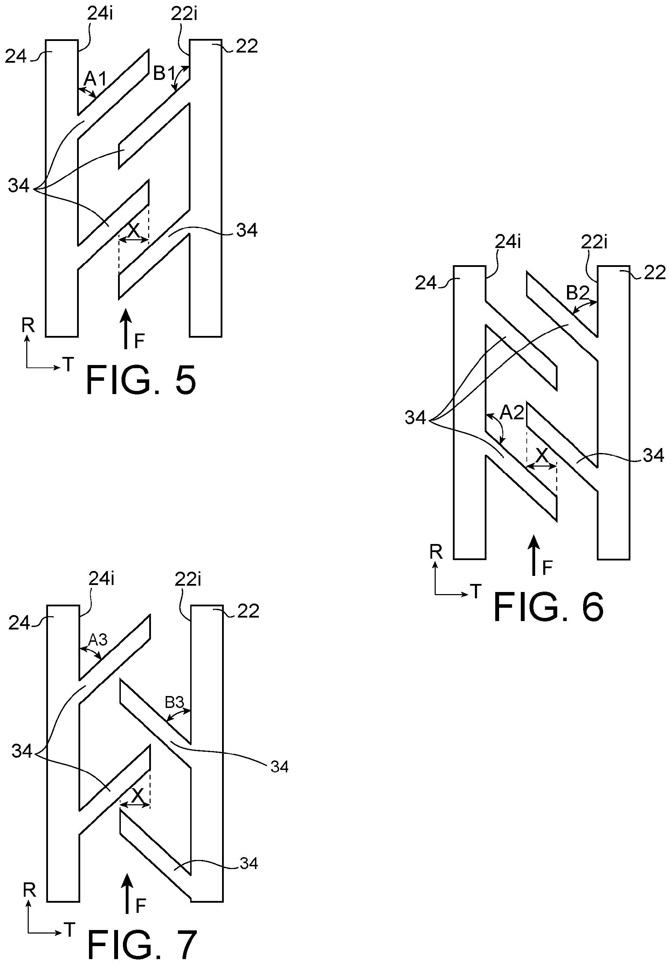

Selon le mode de réalisation de l'invention représenté aux figures 5 à 7, chaque déflecteur 34 est incliné par rapport à la direction transversale.

Comme représenté à la figure 5, les déflecteurs 34 ont tous une même première inclinaison par rapport à la direction transversale, de manière qu'ils sont parallèles les uns aux autres.

Ici, les déflecteurs 34 portés par la paroi d'extrados 24 sont inclinés dans le sens d'écoulement du flux d'air de refroidissement dans la cavité 28 et les déflecteurs 34 portés par la paroi d'intrados 22 sont inclinés dans un sens opposé au sens d'écoulement du flux d'air de refroidissement dans la cavité.

L'angle A1 formé entre la face interne 24i de la paroi d'extrados 24 et une paroi aval de chaque déflecteur 34 qui est porté par la paroi d'extrados 24, selon le sens d'écoulement d'air dans la cavité 28 est aigu, l'angle B1 formé entre la face interne 22i de la paroi d'intrados 22 et une paroi aval de chaque déflecteur 34 qui est porté par la paroi d'intrados 22 est obtus et est supplémentaire de l'angle A1.

Comme représenté à la figure 6, les déflecteurs 34 ont tous une même deuxième inclinaison par rapport à la direction transversale, de manière qu'ils sont parallèles les uns aux autres.

Ici, les déflecteurs 34 portés par la paroi d'extrados 24 sont inclinés dans le sens opposé au sens d'écoulement du flux d'air de refroidissement dans la cavité 28 et les déflecteurs 34 portés par la paroi d'intrados 22 sont inclinés dans le sens d'écoulement du flux d'air de refroidissement dans la cavité.

L'angle A2 formé entre la face interne 24i de la paroi d'extrados 24 et une paroi aval de chaque déflecteur 34 qui est porté par la paroi d'extrados 24, selon le sens d'écoulement d'air dans la cavité 28 est obtus, l'angle B2 formé entre la face interne 22i de la paroi d'intrados 22 et une paroi aval de chaque déflecteur 34 qui est porté par la paroi d'intrados 22 est aigu et est supplémentaire de l'angle A2.

Comme représenté à la figure 7, les déflecteurs 34 sont inclinés par rapport à la direction transversale dans le sens d'écoulement F du flux d'air dans la cavité 28.

Ce mode de réalisation augmente le trajet parcouru par le flux d'air de refroidissement dans la cavité 28, et donc augmente encore les échanges de chaleur.

Les déflecteurs 34 portés par la paroi d'intrados 22 sont par conséquent inclinés par rapport aux déflecteurs 34 portés par la paroi d'extrados 24.

L'angle A3 formé entre la face interne 24i de la paroi d'extrados 24 et une paroi aval de chaque déflecteur 34 qui est porté par la paroi d'extrados 24, selon le sens d'écoulement d'air dans la cavité 28 est aigu, l'angle B3 formé entre la face interne 22i de la paroi d'intrados 22 et une paroi aval de chaque déflecteur 34 qui est porté par la paroi d'intrados 22 est lui aussi aigu et est de préférence égal à l'angle A3.

Les déflecteurs 34 forment alors, en section selon un plan radial transversal, un motif dit en chevrons.

En outre, comme on peut le voir à la figure 2, chaque déflecteur 34 s'étend dans un plan parallèle à la direction axiale.

Il sera compris que l'invention n'est pas limitée à ce mode de réalisation et que chaque déflecteur 34 peut s'étendre dans un plan qui est incliné par rapport à la direction axiale, dans un sens ou dans l'autre.

Pour la réalisation de l'aube 10, un procédé de moulage est mis en oeuvre, avec l'utilisation de noyaux pour former les cavités 28.

Selon un mode de réalisation préféré de ce procédé, chaque noyau est produit par une étape de fabrication additive.

Cette étape permet de former des pièces complexes, ce qui est notamment le cas pour un noyau destiné à la réalisation des cavités 28 car les évidements destinés à former les déflecteurs 34 s'étendent au-delà du plan de joint du noyau.

## Revendications

1. Aube (10) de turbine, qui est destinée à être disposée autour d'un axe de la turbine, en s'étendant radialement par rapport au dit axe de la turbine et comportant à une première extrémité radialement interne un pied (14), à une deuxième extrémité radialement externe un sommet (16) et une pale (12) s'étendant radialement entre le pied (14) et le sommet (16) qui est délimitée par un bord d'attaque (18) axialement amont, un bord de fuite (20) axialement aval, une paroi d'intrados (22) et une paroi d'extrados (24) qui relient entre eux le bord d'attaque (18) et le bord de fuite (20) et au moins une cavité (28) interne s'étendant entre le pied (14) et le sommet (16), une ouverture d'admission (32) d'un fluide dans la cavité (28) situé à une extrémité radialement interne de la cavité (28) et au moins une ouverture de sortie dudit fluide qui débouche hors de l'aube (10),
la cavité (28) comportant une pluralité de déflecteurs (34) qui sont portés par une face interne (22i) de la paroi d'intrados (22) et par une face interne (24i) de la paroi d'extrados (24),
les déflecteurs (34) étant disposés alternativement sur la paroi d'intrados (22) et sur la paroi d'extrados (24) selon la direction radiale de la cavité (28)
dans laquelle chaque déflecteur (34) s'étend selon une direction transversale depuis la face interne (22i) de la paroi d'intrados (22) ou depuis la face interne (24i) de la paroi d'extrados (24), en direction de l'autre de la paroi d'intrados (22) ou de la paroi d'extrados (24),
et dans laquelle la longueur de chaque déflecteur (34) selon la direction transversale est supérieure à la moitié de la distance transversale entre la face interne (22i) de la paroi d'intrados (22) et la face interne (24i) de la paroi d'extrados (24), de part et d'autre du déflecteur (34),
de manière que les extrémités transversales libres des déflecteurs se chevauchent transversalement,
dans laquelle les déflecteurs sont inclinés par rapport à la direction transversale, **caractérisée en ce que** les déflecteurs (34) qui sont portés par la face interne (22i) de la paroi d'intrados (22) et/ou les déflecteurs (34) qui sont portés par la face interne (24i) de la paroi d'extrados (24) sont inclinés par rapport à la direction transversale dans le sens d'écoulement (F) du fluide dans la cavité (28).

2. Aube (10) selon la revendication 1 **caractérisé en ce qu'**un déflecteur (34) porté par la face interne (22i) de la paroi d'intrados (22) est situé radialement entre deux déflecteurs (34) qui sont portés par la face interne (24i) de la paroi d'extrados (24) et un déflecteur (34) porté par la face interne (24i) de la paroi d'extrados (24) est situé radialement entre deux déflecteurs (34) qui sont portés par la face interne (22i) de la paroi d'intrados (22).

3. Aube (10) selon la revendication 1 ou 2, **caractérisée en ce que** chaque déflecteur (34) s'étend entre une paroi d'extrémité axiale amont et une paroi d'extrémité axiale aval de la cavité (28)

4. Aube (10) selon la revendication précédente, **caractérisée en ce que** chaque déflecteur (34) est relié à la paroi d'extrémité axiale amont et à la paroi d'extrémité axiale aval de la cavité (28).

5. Aube selon la revendication 3, **caractérisé en ce que** les déflecteurs sont inclinés par rapport à la direction transversale et les déflecteurs portés par la paroi d'intrados sont inclinés par rapport aux déflecteurs portés par la paroi d'extrados.

6. Aube (10) selon l'une quelconque des revendications précédentes, **caractérisée en ce que** chaque déflecteur (34) qui est porté par l'une de la paroi d'intrados (22) ou de la paroi d'extrados (24) est situé radialement entre deux déflecteurs (34) qui sont portés par l'autre de la paroi d'intrados (22) ou de la paroi d'extrados (24).

7. Aube (10) selon l'une quelconque des revendications précédentes, dans laquelle la cavité (28) comporte plusieurs tronçons (30) d'orientation principale radiale, qui sont décalés axialement l'un par rapport à l'autre et qui s'étendent chacun entre le pied et le sommet de l'aube en formant un serpentin qui s'étend axialement entre le bord d'attaque et le bord de fuite,
**caractérisée en ce que** lesdits déflecteurs (34) sont formés dans au moins un tronçon (30) de la cavité (28).

8. Aube (10) selon la revendication précédente, **caractérisée en ce que** ledit tronçon (30) est un tronçon (30) dans lequel le fluide est destiné à s'écouler dans un sens depuis le sommet (16) vers le pied (14) de l'aube (10).

9. Procédé de fabrication d'une aube (10) selon l'une quelconque des revendications 1 à 6, qui comporte une étape de production d'un noyau correspondant à ladite au moins une cavité (28) de l'aube (10), le noyau comportant des évidements destinés à la formation des déflecteurs (34),
le procédé comportant en outre une étape de mise en place du noyau dans un moule et une étape de moulage de l'aube (10),
**caractérisé en ce que** l'étape de production du noyau est une étape par fabrication additive.

10. Turbomachine comportant une turbine à gaz **caractérisé en ce qu'**elle comporte une pluralité d'aubes (10) selon l'une quelconque des revendications 1 à 6.

## Patentansprüche

1. Turbinenleitschaufel (10), die dazu bestimmt ist, um eine Achse der Turbine herum angeordnet zu werden, sich in Bezug auf die Achse der Turbine radial erstreckt und an einem ersten radial inneren Ende einen Fuß (14), an einem zweiten radial äußeren Ende eine Oberseite (16) und ein Schaufelblatt (12), das sich radial zwischen dem Fuß (14) und der Oberseite (16) erstreckt und das durch eine axial stromaufwärts gelegene Vorderkante (18), eine axial stromabwärts gelegene Hinterkante (20), eine innere Wölbflächenwand (22) und eine äußere Wölbflächenwand (24), die die Vorderkante (18) und die Hinterkante (20) miteinander verbinden, begrenzt wird, und mindestens einen inneren Hohlraum (28), der sich zwischen dem Fuß (14) und der Oberseite (16) erstreckt, eine Einlassöffnung (32) eines Fluids im Hohlraum (28), die sich an einem radial inneren Ende des Hohlraums (28) befindet, und mindestens eine Auslassöffnung des Fluids, die aus der Leitschaufel (10) heraus mündet, umfasst,
wobei der Hohlraum (28) eine Vielzahl von Ablenkplatten (34) umfasst, die von einer Innenfläche (22i) der inneren Wölbflächenwand (22) und von einer Innenfläche (24i) der äußeren Wölbflächenwand (24) getragen werden,
wobei sich jede Ablenkplatte (34) in einer Querrichtung von der Innenfläche (22i) der inneren Wölbflächenwand (22) oder von der Innenfläche (24i) der äußeren Wölbflächenwand (24) in Richtung der anderen der inneren Wölbflächenwand (22) oder der äußeren Wölbflächenwand (24) erstreckt,
und wobei die Länge jeder Ablenkplatte (34) in Querrichtung größer ist als die Hälfte des Querabstands zwischen der Innenfläche (22i) der inneren Wölbflächenwand (22) und der Innenfläche (24i) der äußeren Wölbflächenwand (24) auf beiden Seiten der Ablenkplatte (34),
derart, dass sich die freien Querenden der Ablenkplatten quer überlappen,
wobei die Ablenkplatten in Bezug auf die Querrichtung geneigt sind,
**dadurch gekennzeichnet, dass** die Ablenkplatten (34), die von der Innenfläche (22i) der inneren Wölbflächenwand (22) getragen werden, und/oder die Ablenkplatten (34), die von der Innenfläche (24i) der äußeren Wölbflächenwand (24) getragen werden, in Bezug auf die Querrichtung in der Strömungslaufrichtung (F) des Fluids im Hohlraum (28) geneigt sind.

2. Leitschaufel (10) nach Anspruch 1, **dadurch gekennzeichnet, dass** sich eine Ablenkplatte (34), die von der Innenfläche (22i) der inneren Wölbflächenwand (22) getragen wird, radial zwischen zwei Ablenkplatten (34) befindet, die von der Innenfläche (24i) der äußeren Wölbflächenwand (24) getragen werden, und sich eine Ablenkplatte (34), die von der Innenfläche (24i) der äußeren Wölbflächenwand (24) getragen wird, radial zwischen zwei Ablenkplatten (34) befindet, die von der Innenfläche (22i) der inneren Wölbflächenwand (22) getragen werden.

3. Leitschaufel (10) nach Anspruch 1 oder 2, **dadurch gekennzeichnet, dass** sich jede Ablenkplatte (34) zwischen einer axial stromaufwärts gelegenen Endwand und einer axial stromabwärts gelegenen Endwand des Hohlraums (28) erstreckt.

4. Leitschaufel (10) nach dem vorhergehenden Anspruch, **dadurch gekennzeichnet, dass** jede Ablenkplatte (34) mit der axial stromaufwärts gelegenen Endwand und der axial stromabwärts gelegenen Endwand des Hohlraums (28) verbunden ist.

5. Leitschaufel nach Anspruch 3, **dadurch gekennzeichnet, dass** die Ablenkplatten in Bezug auf die Querrichtung geneigt sind und die Ablenkplatten, die von der inneren Wölbflächenwand getragen werden, in Bezug auf die Ablenkplatten geneigt sind, die von der äußeren Wölbflächenwand getragen werden.

6. Leitschaufel (10) nach einem der vorhergehenden Ansprüche, **dadurch gekennzeichnet, dass** sich jede Ablenkplatte (34), die von einer der inneren Wölbflächenwand (22) und der äußeren Wölbflächenwand (24) getragen wird, radial zwischen zwei Ablenkplatten (34) befindet, die von der anderen der inneren Wölbflächenwand (22) und der äußeren Wölbflächenwand (24) getragen werden.

7. Leitschaufel (10) nach einem der vorhergehenden Ansprüche, **dadurch gekennzeichnet, dass** der Hohlraum (28) mehrere Abschnitte (30) mit radialer Hauptausrichtung umfasst, die in Bezug zueinander axial versetzt sind und sich jeweils zwischen dem Fuß und der Oberseite der Leitschaufel erstrecken und dabei eine Schlangenform bilden, die sich axial zwischen der Vorderkante und der Hinterkante erstreckt,
**dadurch gekennzeichnet, dass** die Ablenkplatten (34) in mindestens einem Abschnitt (30) des Hohlraums (28) ausgebildet sind.

8. Leitschaufel (10) nach dem vorhergehenden Anspruch, **dadurch gekennzeichnet, dass** der Abschnitt (30) ein Abschnitt (30) ist, in dem das Fluid dazu bestimmt ist, in einer Laufrichtung von der Oberseite (16) in Richtung des Fußes (14) der Leitschaufel (10) zu strömen.

9. Verfahren zum Fertigen einer Leitschaufel (10) nach einem der Ansprüche 1 bis 6, das einen Schritt des Herstellens eines Kerns umfasst, der dem mindestens einen Hohlraum (28) der Leitschaufel (10) entspricht, wobei der Kern Aussparungen umfasst, die für die Bildung der Ablenkplatten (34) bestimmt sind,
wobei das Verfahren ferner einen Schritt des Platzierens des Kerns in einer Form und einen Schritt des Formens der Leitschaufel (10) umfasst,
**dadurch gekennzeichnet, dass** der Schritt des Herstellens des Kerns ein Schritt durch additive Fertigung ist.

10. Turbomaschine, die eine Gasturbine umfasst, **dadurch gekennzeichnet, dass** sie eine Vielzahl von Leitschaufeln (10) nach einem der Ansprüche 1 bis 6 umfasst.

## Claims

1. A turbine vane (10), which is intended to be disposed around an axis of the turbine, extending radially relative to said turbine axis and including at a first radially inner end a root (14) , at a second radially outer end, a top (16) and a blade (12) extending radially between the root (14) and the top (16) which is delimited by an axially upstream leading edge (18), an axially downstream trailing edge (20), a lower surface wall (22) and an upper surface wall (24) which connect the leading edge (18) and the trailing edge (20) to each other and at least one inner cavity (28) extending between the root (14) and the top (16), a fluid intake opening (32) in the cavity (28) located at a radially inner end of the cavity (28) and at least one outlet opening of said fluid which opens out of the vane (10),
the cavity (28) including a plurality of deflectors (34) which are carried by an inner face (22i) of the lower surface wall (22) and by an inner face (24i) of the upper surface wall (24),
the deflectors (34) being alternatively disposed on the lower surface wall (22) and on the upper surface wall (24) along the radial direction of the cavity (28)
wherein each deflector (34) extends in a transverse direction from the inner face (22i) of the lower surface wall (22) or from the inner face (24i) of the upper surface wall (24), in the direction of the other one of the lower surface wall (22) or the upper surface wall (24),
and wherein the length of each deflector (34) in the transverse direction is greater than half the transverse distance between the inner face (22i) of the lower surface wall (22) and
the inner face (24i) of the upper surface wall (24), on either side of the deflector (34),
so that the free ends of the deflectors overlap transversely,
wherein the deflectors are inclined relative to the transverse direction,
**characterized in that** the deflectors (34) which are carried by the internal face (22i) of the lower surface wall (22) and/or the deflectors (34) which are carried by the internal face (24i) of the upper surface wall (24) are inclined relative to the transverse direction in the direction of flow (F) of the fluid in the cavity (28).

2. The vane (10) according to claim 1 **characterized in that** a deflector (34) carried by the internal face (22i) of the lower surface wall (22) is located radially between two deflectors (34) which are carried by the face internal (24i) of the upper surface wall (24) and a deflector (34) carried by the internal face (24i) of the upper surface wall (24) is located radially between two deflectors (34) which are carried by the internal face (22i) of the lower surface wall (22).

3. The vane (10) according to claim 1 or 2, **characterised in that** each deflector (34) extends between an upstream axial end wall and a downstream axial end wall of the cavity (28).

4. The vane (10) according to the preceding claim, **characterised in that** each deflector (34) is connected to the upstream axial end wall and to the downstream axial end wall of the cavity (28).

5. The vane according to claim 3, **characterised in that** the deflectors are inclined relative to the transverse direction and the deflectors carried by the lower surface wall are inclined relative to the deflectors carried by the upper surface wall.

6. The vane (10) according to any of the preceding claims, **characterised in that** each deflector (34) which is carried by one of the lower surface wall (22) or the upper surface wall (24) is located radially between two deflectors (34) which are carried by the other of the lower surface wall (22) or the upper surface wall (24).

7. The vane (10) according to any of the preceding claims, wherein the cavity (28) includes several segments (30) of radial main orientation, which are axially offset relative to each other and which each extend between the root and the top of the vane forming a serpentine which axially extends between the leading edge and the trailing edge,
**characterised in that** said deflectors (34) are formed in at least one segment (30) of the cavity (28).

8. The vane (10) according to the preceding claim, **characterised in that** said segment (30) is a segment (30) wherein the fluid is intended to flow in a direction from the top (16) to the root (14) of the vane (10).

9. A method for manufacturing a vane (10) according to any one of claims 1 to 6, which includes a step of producing a core corresponding to said at least one cavity (28) of the vane (10), the core including recesses intended for the formation of the deflectors (34),
the method further including a step of placing the core in a mould and a step of moulding the vane (10),
**characterised in that** the step of producing the core is a step by additive manufacturing.

10. A turbomachine including a gas turbine **characterised in that** it includes a plurality of vanes (10) according to any one of claims 1 to 6.
